# EUROPEAN PATENT APPLICATION

(11) **EP 4 800 907 A1**
(43) Date of publication of application: **02.09.2026**
(21) Application number: 24920075.9
(22) Date of filing: 24.12.2024
(51) Int. Cl.: H02M 7/12, H02M 7/21

(54) **CONVERTER DEVICE, CONTROL METHOD THEREFOR, AND PROGRAM**

(30) Priority: 26.01.2024 JP 2024010228
(71) Applicant: Mitsubishi Heavy Industries Thermal Systems, Ltd., Tokyo 100-8332 (JP)
(72) Inventor: KUHARA, Masakazu, Tokyo 100-8332 (JP); SERIZAWA, Kazuhiko, Tokyo 100-8332 (JP); SUMITO, Kiyotaka, Tokyo 100-8332 (JP); KOMIYA, Shinichi, Tokyo 100-8332 (JP)
(74) Representative: Cabinet Beau de Loménie
(86) International application number: PCT/JP2024/045610
(87) International publication number: WO 2025/158852

(57) **Abstract**

In the present invention, a converter controller (25) comprises: a mode switching unit (44) that, on the basis of physical quantities that relate to a motor connected to the output side of a smoothing capacitor, selects any one among a plurality of control modes; and a switching control unit (43) that executes, as one of the plurality of control modes, a first control mode in which a positive-electrode-side switching element connected to the positive electrode side of the smoothing capacitor is put into the off state, and a period during which a negative-electrode-side switching element connected to the negative electrode of the smoothing capacitor is driven is switched in accordance with AC voltage phase, and during the drive period, the negative-electrode-side switching element is on/off controlled through a plurality of cycles to boost the voltage across the terminals of the smoothing capacitor.

## Description

### Technical Field

The present disclosure relates to a converter device, a control method therefor, and a program.

### Background Art

In the related art, a converter device that converts an alternating-current voltage output from an alternating-current power supply into a direct-current voltage and outputs the direct-current voltage is known.

For example, PTL 1 discloses a converter device including a bridge rectifier circuit consisting of four switching elements, a reactor connected to a line between an alternating-current power supply and the bridge rectifier circuit, and a smoothing capacitor connected to an output side of the bridge rectifier circuit. In the converter device disclosed in PTL 1, for example, in a case where a magnitude of a current flowing through the bridge rectifier circuit is less than a first threshold value, synchronous rectification control is performed, in a case where the magnitude of the current flowing through the bridge rectifier circuit is equal to or greater than the first threshold value and is less than a second threshold value greater than the first threshold value, partial switching control is performed, and in a case where the magnitude of the current flowing through the bridge rectifier circuit is equal to or greater than the second threshold value, high-speed switching control is performed.

### Citation List

### Patent Literature

[PTL 1] Japanese Patent No. 7044462

### Summary of Invention

### Technical Problem

As disclosed in PTL 1, in a case of a converter device having a reactor, energy stored in the reactor is released to a smoothing capacitor, so that electric charge is stored in the smoothing capacitor and a direct-current voltage is boosted. In this case, since the direct-current voltage may be greater than the alternating-current voltage, it is necessary to perform on/off control of the switching element at an appropriate timing to prevent a reverse current flowing from the smoothing capacitor toward the alternating-current power supply.

In addition, in order to achieve high efficiency of power conversion, it is necessary to enhance a power factor improvement effect.

The present disclosure has been made in view of such circumstances, and an object of the present disclosure is to provide a converter device, a control method therefor, and a program capable of easily preventing a reverse current and improving a power factor improvement effect.

### Solution to Problem

A converter device according to an aspect of the present disclosure includes a bridge rectifier circuit that includes a plurality of switching elements connected in a bridge configuration, and is configured to convert an alternating-current power supplied from an alternating-current power supply into a direct-current power and output the direct-current power, a reactor provided in a line that connects the alternating-current power supply and the bridge rectifier circuit, a smoothing capacitor connected between output terminals of the bridge rectifier circuit, and a converter control unit that includes a plurality of control modes and controls the plurality of switching elements in response to the control mode, in which the converter control unit includes a mode switching unit that selects, based on a physical quantity related to a load connected to an output side of the smoothing capacitor, any one of the plurality of control modes, and a switching control unit configured to execute a first control mode, as one of the plurality of control modes, that sets a positive-side switching element connected to a positive electrode side of the smoothing capacitor to an off-state, switches, in accordance with a phase of an alternating-current voltage, drive periods of a negative-side switching element connected to a negative electrode side of the smoothing capacitor, and controls the negative-side switching element to be turned on and off a plurality of times to boost a voltage across the smoothing capacitor, in each of the drive periods.

A motor drive device according to an aspect of the present disclosure includes the converter device described above.

An air conditioner according to an aspect of the present disclosure includes the motor drive device described above, a compressor motor driven by the motor drive device, and a compressor driven by the compressor motor.

A control method for a converter device according to an aspect of the present disclosure is a control method for a converter device including a bridge rectifier circuit that includes a plurality of switching elements connected in a bridge configuration, and is configured to convert an alternating-current power supplied from an alternating-current power supply into a direct-current power and output the direct-current power, a reactor provided in a line that connects the alternating-current power supply and the bridge rectifier circuit, and a smoothing capacitor connected between output terminals of the bridge rectifier circuit, the control method being executed by a computer, provided with a plurality of control modes, and including a process of selecting, based on a physical quantity related to a load connected to an output side of the smoothing capacitor, any one of the plurality of control modes, and a process of executing, as one of the plurality of control modes, a first control mode that sets a positive-side switching element connected to a positive electrode side of the smoothing capacitor to an off-state, switches, in accordance with a phase of an alternating-current voltage, drive periods of a negative-side switching element connected to a negative electrode of the smoothing capacitor, and controls the negative-side switching element to be turned on and off a plurality of times to boost a voltage across the smoothing capacitor, in each of the drive periods.

A program according to an aspect of the present disclosure is a program for causing a computer to execute the control method for a converter device described above. Advantageous Effects of Invention

According to the present disclosure, it is possible to easily prevent a reverse current and improve a power factor improvement effect.

### Brief Description of Drawings

FIG. 1 is a diagram showing a configuration of a motor drive device according to an embodiment of the present disclosure.
FIG. 2 is a functional configuration diagram showing an example of a function of the converter control unit according to one embodiment of the present disclosure.
FIG. 3 is a diagram schematically showing an example of a control signal for each switching element in a synchronous rectification mode according to the embodiment of the present disclosure.
FIG. 4 is a diagram illustrating a current path in a case where an alternating-current power supply has a positive polarity in a bridge rectifier circuit according to the embodiment of the present disclosure.
FIG. 5 is a diagram illustrating a current path in a case where the alternating-current power supply has a negative polarity in the bridge rectifier circuit according to the embodiment of the present disclosure.
FIG. 6 is a diagram schematically showing an example of a control signal for each switching element in a transverse bridgeless mode according to the embodiment of the present disclosure.
FIG. 7 is a diagram schematically showing an example of a control signal for each switching element in a full switching mode according to the embodiment of the present disclosure.
FIG. 8 is a diagram for describing a drive period of each switching element in the full switching mode according to the embodiment of the present disclosure.
FIG. 9 is a diagram showing an example of a switching condition table according to the embodiment of the present disclosure.
FIG. 10 is a diagram showing a configuration example of an air conditioner to which the motor drive device according to the embodiment of the present disclosure is applied.

### Description of Embodiments

Hereinafter, a converter device, a control method therefor, and a program according to an embodiment of the present disclosure will be described with reference to the drawings.

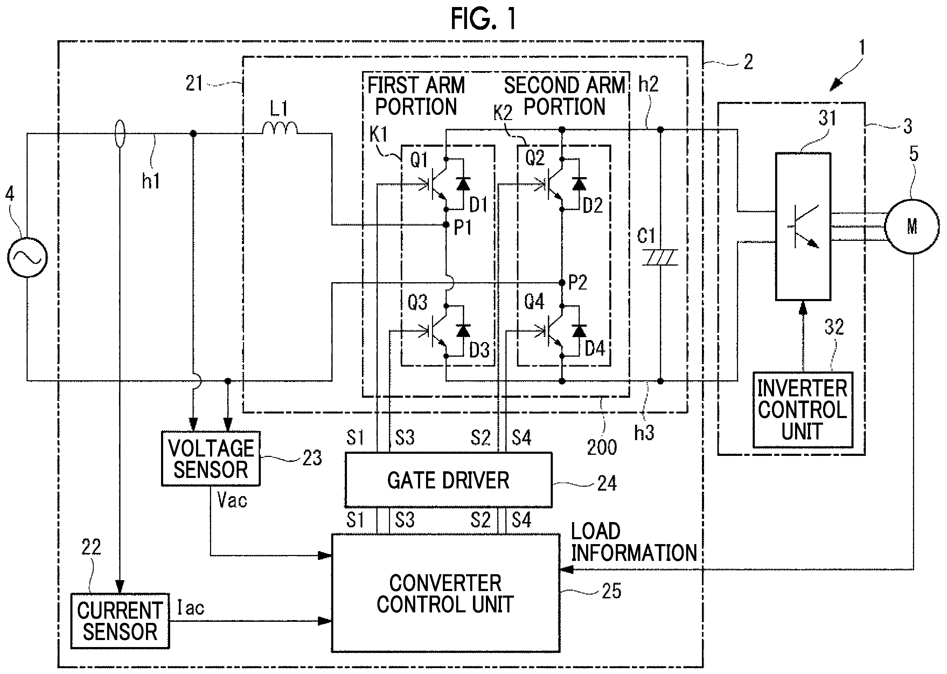

FIG. 1 is a diagram showing a schematic configuration of a motor drive device 1 according to the embodiment of the present disclosure. The motor drive device 1 includes a converter device 2 and an inverter device 3, converts alternating-current power from an alternating-current power supply 4 into direct-current power by the converter device 2, converts the direct-current power into three-phase alternating-current power by the inverter device 3, and outputs the three-phase alternating-current power to a motor 5 that is a load.

In the present embodiment, a case where single-phase alternating-current power is supplied from the alternating-current power supply 4 to the converter device 2 will be described as an example, but the present disclosure is not limited thereto. For example, three-phase alternating-current power may be supplied from the alternating-current power supply 4.

The motor 5 is driven according to the three-phase alternating-current power supplied from the inverter device 3. Examples of the motor 5 include a compressor motor used in an air conditioner.

The converter device 2 includes, for example, a rectification circuit 21 and a converter control unit 25 that controls the rectification circuit 21.

The rectification circuit 21 includes, for example, a bridge rectifier circuit 200, a reactor L1, and a smoothing capacitor C1.

The bridge rectifier circuit 200 includes a plurality of switching elements Q1 to Q4 that are connected in a bridge configuration. The switching elements Q1 to Q4 are, for example, semiconductor switches such as a metal oxide semiconductor field effect transistor (MOSFET) and an insulated gate bipolar transistor (IGBT), and have parasitic diodes D1 to D4 between a source and a drain.

The switching elements Q1 to Q4 are, for example, MOSFETs formed of a wide bandgap semiconductor (WBG semiconductor). Here, the WBG semiconductor is, for example, a semiconductor having a bandgap of 3.0 eV or more. Examples of the WBG semiconductor include silicon carbide (SiC), gallium oxide (Ga₂O₃), and gallium nitride (GaN). In general, since the WBG semiconductor has a smaller switching loss than a silicon semiconductor, it is possible to reduce the loss by using the MOSFET formed of the WBG semiconductor for the switching elements Q1 to Q4.

In addition, as the MOSFET, for example, a MOSFET (hereinafter, referred to as an "SJ-MOSFET") having a super junction (SJ) structure with a small on-resistance (operating resistance when the MOSFET is operating) may be adopted.

The bridge rectifier circuit 200 includes a first arm portion K1 and a second arm portion K2.

In the first arm portion K1, the switching element Q1 and the switching element Q3 are connected in series. In the first arm portion K1, a source of the switching element Q1 and a drain of the switching element Q3 are connected to each other, and a connection point P1 is connected to a first terminal of the alternating-current power supply 4 via the reactor L1.

In the second arm portion K2, the switching element Q2 and the switching element Q4 are connected in series. In the second arm portion K2, a source of the switching element Q2 and a drain of the switching element Q4 are connected to each other, and a connection point P2 is connected to a second terminal of the alternating-current power supply 4.

The reactor L1 is provided in a line h1 that connects the alternating-current power supply 4 and the bridge rectifier circuit 200. The reactor L1 stores the power supplied from the alternating-current power supply 4 as energy, and releases the energy to perform the voltage boosting and the power factor improvement.

The smoothing capacitor C1 is connected between output terminals of the bridge rectifier circuit 200. A positive electrode of the smoothing capacitor C1 is connected to the drains of the switching elements Q1 and Q2 via a line h2, and a negative electrode of the smoothing capacitor C1 is connected to the sources of the switching elements Q3 and Q4 via a line h3. The output from the bridge rectifier circuit 200 is smoothed by the smoothing capacitor C1, and a direct-current voltage with little fluctuation is supplied from the converter device 2 to the inverter device 3. The smoothing capacitor C1 is, for example, an electrolytic capacitor.

Hereinafter, in the connection relationship with the smoothing capacitor C1, the switching elements Q1 and Q2 are also referred to as positive-side switching elements, and the switching elements Q3 and Q4 are also referred to as negative-side switching elements.

The converter device 2 is provided with a current sensor 22 and a voltage sensor 23.

The current sensor 22 detects an AC current Iac input from the alternating-current power supply 4 to the rectification circuit 21 at a sampling period sufficiently shorter than a period of an alternating-current voltage, and outputs a current detection value to the converter control unit 25.

The voltage sensor 23 detects an alternating-current voltage Vac input from the alternating-current power supply 4 to the rectification circuit 21 at a sampling period sufficiently shorter than the period of the alternating-current voltage, and outputs a voltage detection value to the converter control unit 25.

The current sensor 22 and the voltage sensor 23 may appropriately adopt a known configuration, and a detailed description thereof will be omitted.

The converter control unit 25 controls the switching elements Q1 to Q4 of the bridge rectifier circuit 200 based on the detection values of the current sensor 22, the voltage sensor 23, and the like.

Details of the converter control unit 25 will be described later.

The inverter device 3 converts the direct-current power output by the rectification circuit 21 into three-phase alternating-current power and outputs the three-phase alternating-current power to the motor. The inverter device 3 includes, for example, an intelligent power module (IPM) 31 and an inverter control unit 32. The IPM 31 is, for example, a bridge rectifier circuit including six switching elements. The switching elements are turned on and off based on a control signal (for example, a PWM signal) output from the inverter control unit 32, so that the direct-current power supplied from the rectification circuit 21 is converted into three-phase alternating-current power and output to the motor 5 which is a three-phase alternating-current motor.

The configuration of the inverter device 3 is an example, and a known configuration can be appropriately adopted.

Next, the converter control unit 25 will be described in detail.

The converter control unit 25 is, for example, a computer and includes a processing circuit. The processing circuit includes, for example, a processor, a main memory, a secondary storage (memory), and the like. In addition, the converter control unit 25 may include a communication interface for transmitting and receiving information to and from another device.

Examples of the processor include a central processing unit (CPU), a microprocessor, a microcomputer, and a digital signal processor (DSP).

The main memory is configured with, for example, a writable memory such as a cache memory or a random access memory (RAM), and is used as a work region performing reading of an execution program of the processor, writing of processing data by the execution program, or the like.

The secondary storage is a non-transitory computer readable storage medium. The secondary storage is, for example, a magnetic disk, a magneto-optical disk, a CD-ROM, a DVD-ROM, a semiconductor memory, or the like.

As an example, a series of processes for implementing various functions to be described later are stored in the secondary storage in a program form. The processor reads the program into the main memory to execute information processing and operation processing, and thus, various functions are implemented. The program may be applied in various forms, such as being installed in advance in a secondary storage, provided in a state of being stored in a computer readable storage medium, or distributed via communication means using wired or wireless methods. The computer-readable storage medium is a magnetic disk, a magneto-optical disk, a CD-ROM, a DVD-ROM, a semiconductor memory, or the like.

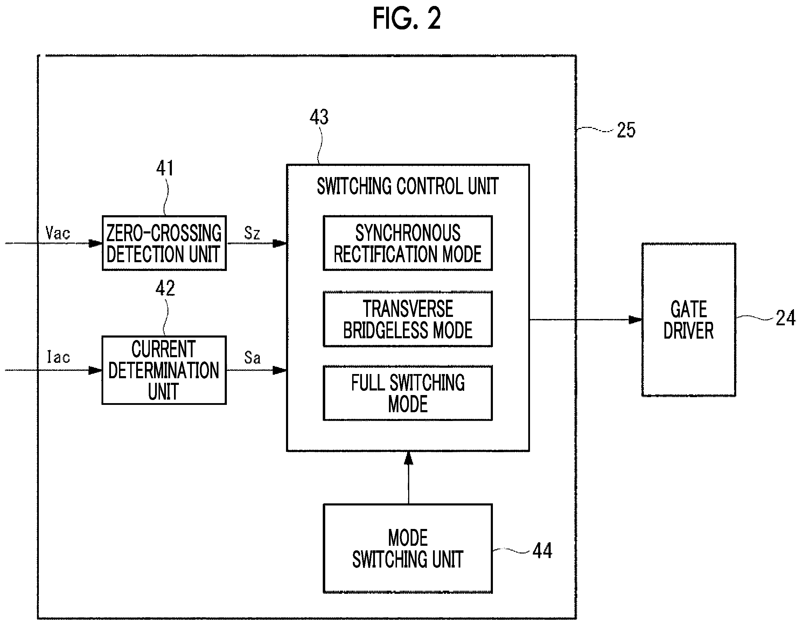

FIG. 2 is a functional configuration diagram showing an example of functions provided in the converter control unit 25. As shown in FIG. 2, the converter control unit 25 includes, for example, a zero-crossing detection unit 41, a current determination unit 42, a switching control unit 43, and a mode switching unit 44.

The zero-crossing detection unit 41 outputs a zero-crossing signal Sz corresponding to a polarity of the alternating-current voltage Vac detected by the voltage sensor 23. The zero-crossing detection unit 41 outputs, for example, a signal of "1" during a period in which the alternating-current voltage Vac is positive, and a signal of "0" during a period in which the alternating-current voltage Vac is negative. As a result, a timing at which the zero-crossing signal Sz is switched can be detected as a zero-crossing point.

The current determination unit 42 determines whether or not a current flows through the bridge rectifier circuit 200 based on the AC current Iac detected by the current sensor 22, and outputs a current determination signal Sa indicating the presence or absence of the current. The current determination unit 42 outputs, for example, a signal of "1" during a period in which the current flows through the bridge rectifier circuit 200, and a signal of "0" during a period in which the current does not flow through the bridge rectifier circuit 200.

The switching control unit 43 has a plurality of control modes.

The plurality of control modes include a transverse bridgeless mode as a first control mode. In addition, in the present embodiment, the plurality of control modes include a full switching mode as a second control mode and a synchronous rectification mode as a third control mode. Each of these control modes will be described below.

The mode switching unit 44 selects any one of the plurality of control modes based on a physical quantity related to a motor (load) connected to an output side of the smoothing capacitor C1. Examples of the physical quantity related to the motor 5 include a rotation speed of the motor 5, power consumption of the motor 5, required power of the motor 5, and a rotation speed command of the motor 5. In order to acquire such a physical quantity related to the motor, the converter control unit 25 is configured to acquire necessary information from a sensor (not shown) provided in the motor 5 or a motor control unit (not shown) that controls the motor 5.

A detailed description of the mode switching unit 44 will be described below.

Next, each control mode executed by the switching control unit 43 will be described.

### (Synchronous Rectification Mode)

In the synchronous rectification mode, the switching elements Q1 and Q4 are turned on while the switching elements Q2 and Q3 are turned off in a period in which the alternating-current voltage Vac is positive, and the switching elements Q2 and Q3 are turned on while the switching elements Q1 and Q4 are turned off in a period in which the alternating-current voltage Vac is negative.

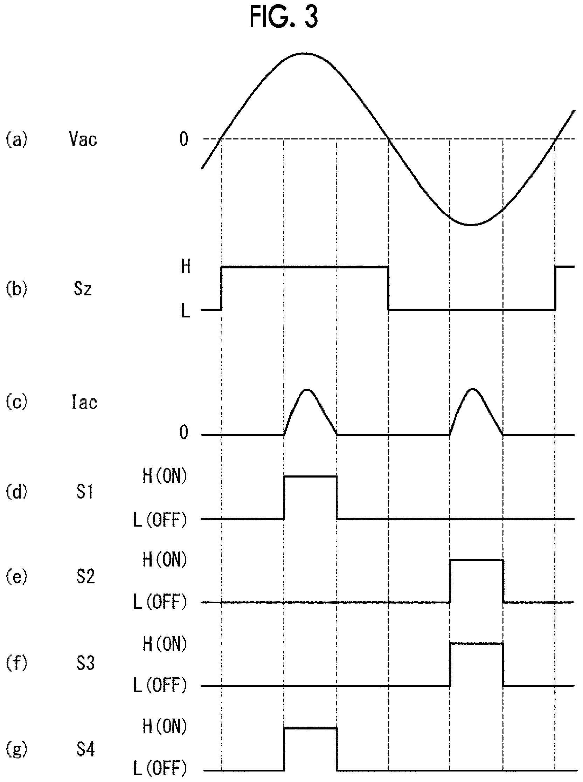

FIG. 3 is a diagram schematically showing an example of control signals S1 to S4 of the switching elements Q1 to Q4 in the synchronous rectification mode. In FIG. 3, (a) shows the alternating-current voltage Vac, (b) shows the zero-crossing signal Sz, (c) shows the AC current Iac, (d) shows the control signal S1 of the switching element Q1, (e) shows the control signal S2 of the switching element Q2, (f) shows the control signal S3 of the switching element Q3, and (g) shows the control signal S4 of the switching element Q4. In the AC current Iac, a current in a reverse phase is shown in an inverted manner.

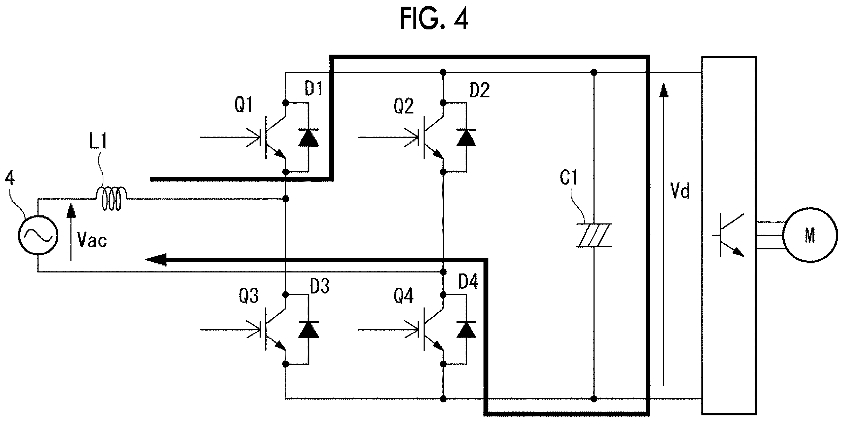

In the synchronous rectification mode, as shown in FIG. 3, the switching elements Q1 and Q4 are turned on in a period in which the alternating-current voltage Vac is positive and a period in which the AC current Iac flows. In this case, as shown by a thick line in FIG. 4, a current flows from the first terminal of the alternating-current power supply 4 to the reactor L1, the switching element Q1, the smoothing capacitor C1, the switching element Q4, and the second terminal of the alternating-current power supply 4.

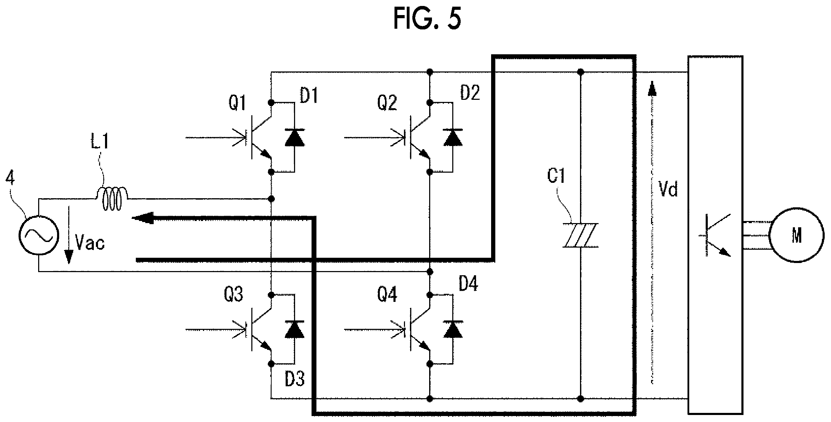

In addition, the switching elements Q2 and Q3 are turned on in a period in which the alternating-current voltage Vac is negative and a period in which the AC current Iac flows. In this case, as shown by a thick line in FIG. 5, a current flows from the second terminal of the alternating-current power supply 4 to the switching element Q2, the smoothing capacitor C1, the switching element Q3, the reactor L1, and the first terminal of the alternating-current power supply 4.

The on-periods of the switching elements Q1 to Q4 in the synchronous rectification mode are examples, and the present disclosure is not limited thereto. For example, known synchronous rectification control can be appropriately adopted. For example, control may be performed such that the negative-side switching elements Q3 and Q4 connected to the negative electrode side of the smoothing capacitor C1 are maintained in an on-state for substantially a half cycle regardless of whether or not the AC current Iac flows.

### (Transverse Bridgeless Mode)

In the transverse bridgeless mode, the positive-side switching elements Q1 and Q2 connected to the positive electrode side of the smoothing capacitor C1 are turned off, and the drive periods of the negative-side switching elements Q3 and Q4 connected to the negative electrode side of the smoothing capacitor C1 are switched according to the phase of the alternating-current voltage Vac, and the voltage Vdc across the smoothing capacitor C1 is boosted by performing on/off control on the negative-side switching elements Q3 and Q4 a plurality of times in the drive period.

In the present embodiment, the drive periods of the negative-side switching elements Q3 and Q4 are switched for each half cycle of the alternating-current voltage Vac with reference to a zero-crossing point.

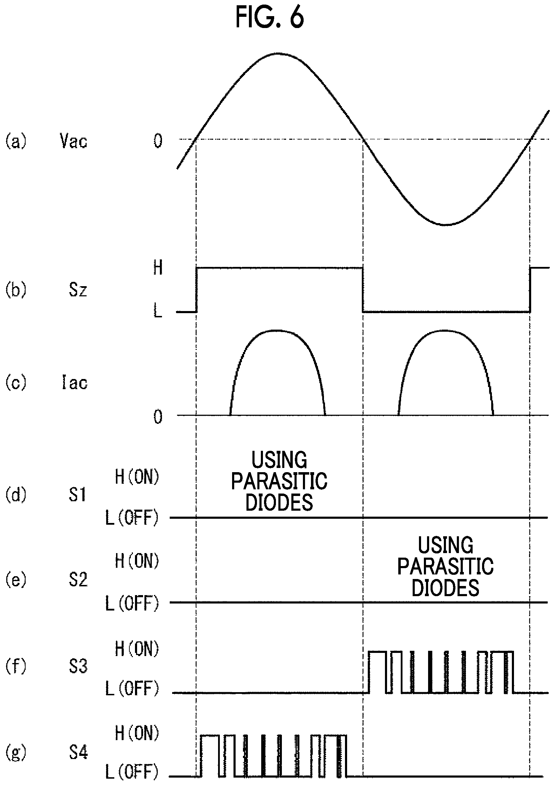

FIG. 6 is a diagram schematically showing an example of control signals S1 to S4 of the switching elements Q1 to Q4 in the transverse bridgeless mode. Here, the arrangement of the signal waveforms in FIG. 6 is the same as that in FIG. 3.

In the transverse bridgeless mode, as shown in FIG. 6 as an example, in a period in which the alternating-current voltage Vac is positive, the switching element Q4 is controlled by pulse amplitude modulation (PAM), while the switching elements Q1 to Q3 are turned off. In this case, when the switching element Q4 is in an on-state, a current flows from the first terminal of the alternating-current power supply 4 to the reactor L1, the parasitic diode D1 of the switching element Q1, the smoothing capacitor C1, the switching element Q4, and the second terminal of the alternating-current power supply 4. As a result, energy is stored in the reactor L1. Then, the switching element Q4 is turned off, so that the energy stored in the reactor L1 is released to the smoothing capacitor C1. Then, the on/off of the switching element Q4 is repeated, so that the direct-current voltage is boosted and the power factor is improved.

In addition, in a period in which the alternating-current voltage Vac is negative, the switching element Q3 is controlled by PAM, while the switching elements Q1, Q2, and Q4 are turned off. In this case, when the switching element Q3 is in an on-state, a current flows from the second terminal of the alternating-current power supply 4 to the parasitic diode D2 of the switching element Q2, the smoothing capacitor C1, the switching element Q3, the reactor L1, and the first terminal of the alternating-current power supply 4.

The PAM control of the switching elements Q3 and Q4 can be appropriately performed by adopting any of various known techniques. For example, the control signals S3 and S4 are generated by using a pulse width modulation (PWM) technique. Specifically, a modulation wave indicating a sine wave corresponding to the AC current Iac is generated, the modulation wave is compared with a carrier wave (for example, a triangular wave) having a predetermined frequency, and a control signal (pulse width modulation (PWM) signal) is generated in which a period in which a value of the carrier wave exceeds a value of the modulation wave is on and a period in which the value of the carrier wave is equal to or less than the value of the modulation wave is off. Then, the switching elements Q3 and Q4 that output the PWM signal may be switched for each half cycle based on the zero-crossing signal.

In addition, a control method (for example, Japanese Patent No. 7080120) using a technique of reducing a distortion factor of the input current by applying phase adjustment to the above-described general PWM technique may be used.

By performing the PAM control of the switching elements Q4 and Q3, it is possible to approximate the current flowing from the alternating-current power supply 4 to the rectification circuit 21 to a sine wave. In addition, it is also possible to perform the boost control of increasing the voltage Vdc across the smoothing capacitor C1 to √2 times or more of the effective value of the alternating-current voltage Vac. As a result, it is possible to obtain the power factor improvement effect and to reduce the power supply harmonic current. In addition, in the transverse bridgeless mode, the switching elements Q1 and Q2 are turned off. As a result, it is possible to easily prevent the reverse current that may occur due to the boost of the voltage Vdc across the smoothing capacitor C1.

That is, in the transverse bridgeless mode, since the PAM control is performed, the voltage Vdc across the smoothing capacitor C1 is boosted, and a phenomenon in which the voltage on the output side of the bridge rectifier circuit 200 is higher than the voltage on the input side may occur. In such a state, when the positive-side switching elements Q1 and Q2 are turned on at an inappropriate timing, there is a possibility that a current (reverse current) flows from the smoothing capacitor C1 to the alternating-current power supply 4. However, in the transverse bridgeless mode, since the switching elements Q1 and Q2 are always in the off-state, the reverse current can be easily prevented, and by performing the PAM control of the switching element Q4, the voltage Vdc across the smoothing capacitor C1 can be boosted to a desired voltage.

### (Full Switching Mode)

In the full switching mode, the drive period of the switching elements Q1 and Q2 is switched for each half cycle of the alternating-current voltage Vac with reference to the zero-crossing point, and in the drive period of the positive-side switching elements Q1 and Q2, the negative-side switching elements Q4 and Q3 paired with the respective positive-side switching elements Q1 and Q2 are alternately turned on and off to boost the voltage Vdc across the smoothing capacitor C1.

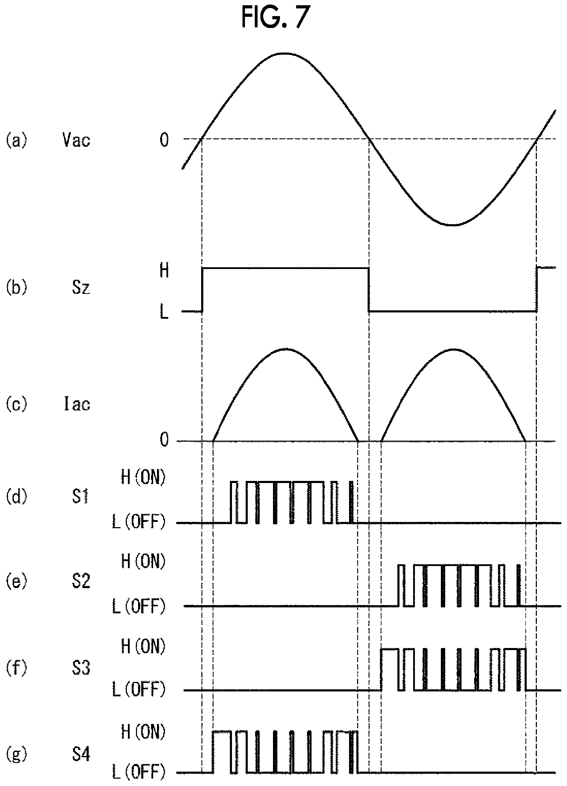

FIG. 7 is a diagram schematically showing an example of the control signal of each of the switching elements Q1 to Q4 in the full switching mode. Here, the arrangement of the signal waveforms in FIG. 7 is the same as that in FIG. 3.

In the full switching mode, as shown in FIG. 7, the switching elements Q1 and Q4 are controlled by the PAM control in a period in which the alternating-current voltage Vac is positive. Here, when the switching elements Q1 and Q4 are simultaneously turned on, there is a possibility that a reverse current flows, so that the control signal of the switching element Q1 is a signal obtained by inverting the control signal of the switching element Q4.

Similarly, the switching elements Q2 and Q3 are controlled by the PAM control in a period in which the alternating-current voltage Vac is negative. Here, when the switching elements Q2 and Q3 are simultaneously turned on, there is a possibility that a reverse current flows, so that the control signal of the switching element Q2 is a signal obtained by inverting the control signal of the switching element Q3.

In addition, the generation processing of the control signal by the PAM control is the same as that in the transverse bridgeless mode described above. That is, the control signal obtained by inverting the control signal generated for the switching elements Q3 and Q4 may be provided to the switching elements Q2 and Q1, respectively.

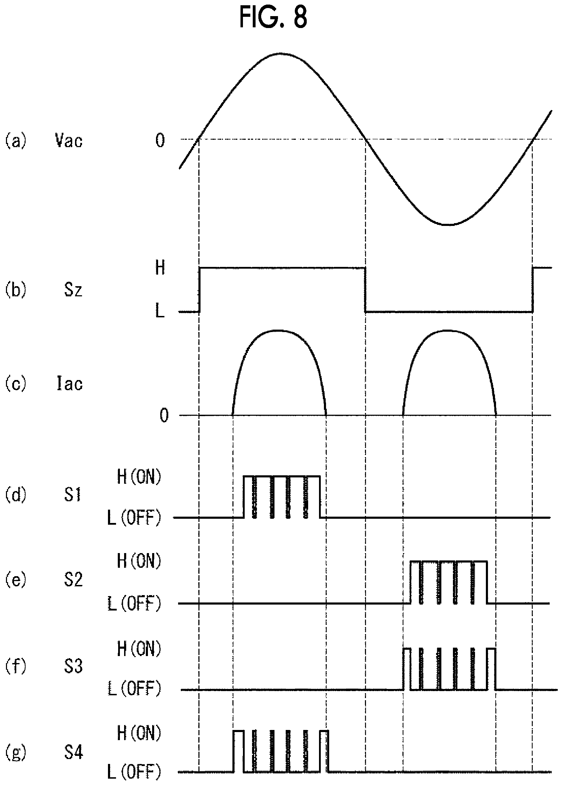

In the full switching mode, the drive period of the switching elements Q1 to Q4 may be a period in which a current flows through the bridge rectifier circuit 200. FIG. 8 shows an example of the control signals S1 to S4 of the switching elements Q1 to Q4 in this case. Here, the arrangement of the signal waveforms in FIG. 8 is the same as that in FIG. 3.

As shown in FIG. 8, the switching elements Q1 to Q4 are controlled by the PAM control in a period in which a current in a positive direction flows through the bridge rectifier circuit 200. Specifically, a timing at which the current determination unit 42 determines that a current flows through the bridge rectifier circuit 200 is set as a start timing of the drive period of the switching elements Q1 to Q4.

In this way, even in the full switching mode, it is possible to more reliably prevent the reverse current by turning on the switching elements Q1 to Q4 only in a period in which a current flows through the bridge rectifier circuit 200.

Since the reverse current does not flow even when the negative-side switching elements Q3 and Q4 are turned on in a period in which no current flows, the negative-side switching elements Q3 and Q4 may be repeatedly turned on and off regardless of whether or not a current flows.

The mode switching unit 44 selects any one of a plurality of control modes based on a physical quantity related to the motor 5 connected to the output side of the smoothing capacitor C1. More specifically, the mode switching unit 44 selects any one of the plurality of control modes based on, for example, at least one of the required power of the motor 5, the rotation speed of the motor 5, the rotation speed command of the motor 5, the power consumption of the motor 5, or the induced voltage of the motor 5.

The mode switching unit 44 selects, for example, the transverse bridgeless mode when the physical quantity related to the motor 5 is less than a first threshold value, and selects the full switching mode when the physical quantity is equal to or greater than the first threshold value. In addition, the mode switching unit 44 selects the synchronous rectification mode when the physical quantity related to the motor 5 is less than a second threshold value, which is a value smaller than the first threshold value, and selects the transverse bridgeless mode when the physical quantity is equal to or greater than the second threshold value and less than the first threshold value.

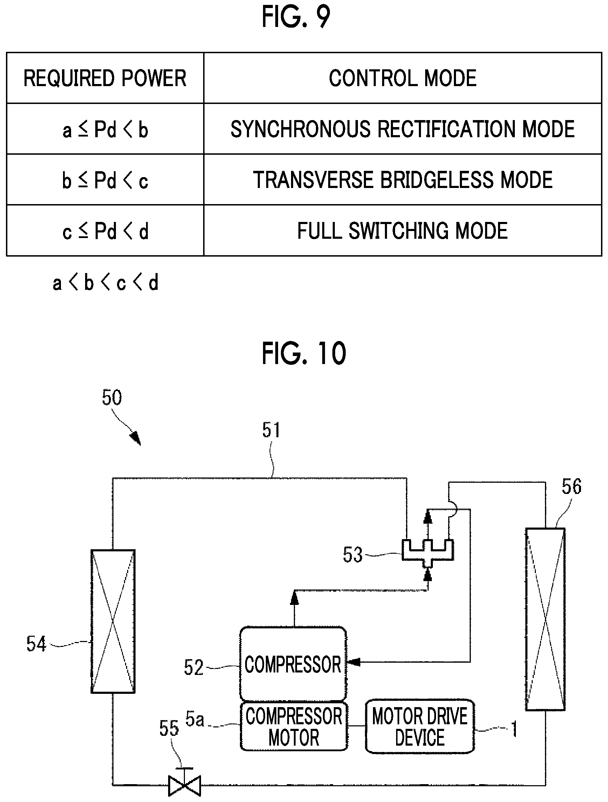

Specifically, the mode switching unit 44 has, for example, a switching condition table in which a switching condition and a control mode are associated with each other as shown in FIG. 9, and switches the control mode using the switching condition table. FIG. 9 shows an example of a switching condition table in a case where the required power Pd of the motor 5 is used as the physical quantity related to the motor. Here, the required power has a relationship of a < b < c < d. The control modes are switched in the order of the synchronous rectification mode, the transverse bridgeless mode, and the full switching mode from a low required power to a high required power.

For example, a value of the required power at which the switching is performed from the synchronous rectification mode to the transverse bridgeless mode is set to a value of the required power at which the motor 5 requires a voltage equal to or higher than the voltage Vdc across the smoothing capacitor C1 in the synchronous rectification mode, that is, the required power at which the direct-current voltage needs to be boosted.

Next, a control method for the converter device 2 according to the present embodiment will be described.

Hereinafter, a case where the synchronous rectification mode is selected as the current execution mode will be described as an example.

In this case, the AC current Iac is detected by the current sensor 22 at a predetermined sampling interval, and the alternating-current voltage Vac is detected by the voltage sensor 23 and is output to the converter control unit 25.

In the converter control unit 25, the zero-crossing detection unit 41 generates the zero-crossing signal Sz based on the alternating-current voltage Vac and outputs the zero-crossing signal Sz to the switching control unit 43. In addition, the current determination unit 42 detects whether or not the current flows through the bridge rectifier circuit 200 based on the AC current Iac, and outputs the current determination signal Sa based on the detection result to the switching control unit 43.

The switching control unit 43 generates control signals S1 to S4 based on the zero-crossing signal Sz and the current determination signal Sa. That is, the switching control unit 43 generates the control signal that outputs "1" in a period in which the current determination signal Sa indicates "1" and outputs "0" in a period in which the current determination signal Sa indicates "0". The generated control signal is output to the gate driver 24 as the control signals S1 and S4 of the switching elements Q1 and Q4 in a period in which the zero-crossing signal Sz is "1", and is output to the gate driver 24 as the control signals S2 and S3 of the switching elements Q2 and Q3 in a period in which the zero-crossing signal Sz is "0". Then, the gate driver 24 drives the switching elements Q1 to Q4 based on the control signals S1 to S4, so that the control in the synchronous rectification mode as shown in FIG. 3 is executed.

In addition, the mode switching unit 44 acquires the required power Pd of the motor at a predetermined time interval as input information, and compares the required power Pd with each switching condition registered in the switching condition table. Then, when the required power Pd exceeds the upper limit value b of the required power in the synchronous rectification mode and the condition of the transverse bridgeless mode is satisfied, the control mode is switched from the synchronous rectification mode to the transverse bridgeless mode.

In the transverse bridgeless mode, the switching control unit 43 switches the switching elements Q3 and Q4, which are the drive targets, for each half cycle based on the zero-crossing signal Sz, and generates the PWM signal as the control signal. The generated control signal is given to the gate driver 24 as the control signal S4 of the switching element Q4 in a period in which the zero-crossing signal Sz is "1", and is output to the gate driver 24 as the control signal S3 of the switching element Q3 in a period in which the zero-crossing signal Sz is "0". Then, the gate driver 24 drives the switching elements Q3 and Q4 based on the control signals, so that the control in the transverse bridgeless mode as shown in FIG. 6 is executed.

In addition, the mode switching unit 44 acquires the required power Pd of the motor at a predetermined time interval as input information, and compares the required power Pd with each switching condition registered in the switching condition table. Then, when the required power Pd exceeds the upper limit value c of the required power in the transverse bridgeless mode and the condition of the full switching mode is satisfied, the control mode is switched from the transverse bridgeless mode to the full switching mode.

In the full switching mode, the switching control unit 43 switches the switching elements Q1 and Q4, and Q2 and Q3, which are the drive targets, for each half cycle based on the zero-crossing signal Sz, and generates the PWM signal. The generated PWM signal is output to the gate driver 24 as the control signal S4 of the switching element Q4 in a period in which the zero-crossing signal Sz is "1", and the inverted signal obtained by inverting the PWM signal is output to the gate driver 24 as the control signal S1 of the switching element Q1. In addition, in a period in which the zero-crossing signal Sz is "0", the generated PWM signal is output to the gate driver 24 as the control signal S3 of the switching element Q3, and the inverted signal obtained by inverting the PWM signal is output to the gate driver 24 as the control signal S2 of the switching element Q2. Then, the gate driver 24 drives the switching elements Q1 to Q4 based on the control signals S1 to S4, so that the control in the full switching mode as shown in FIG. 7 is executed.

Then, as described above, the control mode is dynamically switched according to the load condition, so that appropriate rectification control based on the operation state of the motor 5 is executed.

As described above, according to the converter device, the control method therefor, and the program according to the present embodiment, the mode switching unit 44 that selects any one of the plurality of control modes based on the required power of the motor 5, and the switching control unit 43 that controls the switching elements Q1 to Q4 based on the control mode selected by the mode switching unit 44 are provided. In addition, the plurality of control modes include the transverse bridgeless mode (first control mode) in which the positive-side switching elements Q1 and Q2 connected to the positive electrode side of the smoothing capacitor C1 are turned off, the drive period of the negative-side switching elements Q3 and Q4 connected to the negative electrode side of the smoothing capacitor C1 is switched for each half cycle of the alternating-current voltage Vac, and the negative-side switching elements Q3 and Q4 are controlled to be turned on and off a plurality of times in the drive period to boost the voltage Vdc across the smoothing capacitor C1.

As described above, in the transverse bridgeless mode, since the positive-side switching elements Q1 and Q2 are turned off, it is possible to easily prevent the reverse current flowing from the smoothing capacitor C1 toward the alternating-current power supply 4. In addition, by performing the PAM control on the negative-side switching elements Q3 and Q4, it is possible to boost the voltage Vdc across the smoothing capacitor C1 and to approximate the current flowing from the alternating-current power supply 4 to the rectification circuit 21 to a sine wave.

The present disclosure has been described above with reference to the embodiments, but the technical scope of the present disclosure is not limited to the above embodiments. Various modifications or improvements can be added to the above embodiments within the scope not departing from the concept of the present disclosure, and forms to which the modifications or the improvements are added are also included in the technical scope of the present disclosure.

For example, in the embodiment described above, a case where a current flows through the parasitic diodes included in the switching elements Q1 to Q4 has been described as an example, but the present disclosure is not limited thereto. For example, a configuration may be adopted in which a diode is connected in parallel with each of the switching elements Q1 to Q4, and a current is caused to flow through the diodes instead of the above-described parasitic diodes.

In addition, in the embodiment described above, the synchronous rectification mode is provided, but the synchronous rectification mode may be omitted. In this case, for example, the transverse bridgeless mode and the full switching mode may be provided, and the transverse bridgeless mode may be adopted even in the execution period of the above-described synchronous rectification mode. In this case, the switching timing between the transverse bridgeless mode and the full switching mode can be appropriately set according to the operation.

In addition, in the embodiment described above, for example, the following modification examples are given as the switching condition for switching from the transverse bridgeless mode to the full switching mode.

### [Modification Example 1]

For example, as the switching condition for switching from the transverse bridgeless mode to the full switching mode, a condition in which a period during which a current in a positive direction (from the alternating-current power supply 4 to the smoothing capacitor C1) flows through the bridge rectifier circuit 200 is equal to or longer than a predetermined period (predetermined phase angle) may be adopted as the switching condition.

For example, immediately after the switching from the synchronous rectification mode to the transverse bridgeless mode, the boost operation is just started, and the energy stored in the reactor L1 is not so high. Therefore, for example, as illustrated in (c) of FIG. 6, the period during which the current in the positive direction flows is relatively short. On the other hand, by continuously performing the transverse bridgeless mode, the energy stored in the reactor L1 gradually increases, and the voltage on the alternating-current power supply side increases, so that the period during which the current in the positive direction flows gradually increases (for example, see (c) of FIG. 7).

As the period during which the current in the positive direction flows increases, the period during which the reverse current flows decreases, so that the necessity of strictly adjusting the on-timing (phase) of the positive-side switching elements Q1 and Q2 is reduced. Therefore, for example, in a case where the period during which the signal of "1" is output in the current determination signal Sa output from the current determination unit 42 exceeds a predetermined threshold value, the transverse bridgeless mode may be switched to the full switching mode.

### [Modification Example 2]

The switching condition for switching from the transverse bridgeless mode to the full switching mode may be set based on, for example, the execution time of the transverse bridgeless mode.

For example, in the transverse bridgeless mode, since the positive-side switching elements Q1 and Q2 are turned off, the reverse current can be easily prevented. On the other hand, since the rectification is performed using the parasitic diodes D1 and D2 of the positive-side switching elements Q1 and Q2, the voltage drop is larger and the efficiency is lower than in the synchronous rectification mode. In addition, it is necessary to consider the heat generation. In consideration of such a trade-off, a certain period in a transient state when transitioning from the synchronous rectification mode to the full switching mode may be set, and the mode may be switched to the full switching mode when the certain period has elapsed.

In this case, the main control modes are the synchronous rectification mode and the full switching mode, but when switching from the synchronous rectification mode to the full switching mode, the voltage of the reactor L1 is not so high, so that it is difficult to prevent the reverse flow, and the state becomes unstable. Therefore, in a temporary period when switching from the synchronous rectification mode to the full switching mode, the transverse bridgeless mode is temporarily adopted to prevent the reverse current, and after the voltage is stabilized, the mode is transitioned to the full switching mode.

In addition, in the above-described embodiment, the case of single-phase (two-phase) has been described as an example, but the present disclosure is not limited to this example. For example, the present embodiment is also applicable to a case where three-phase alternating-current power is supplied from a three-phase alternating-current power supply. In this case, in the above-described bridge rectifier circuit 200, a third arm portion having two switching elements connected in series is connected in parallel with the first arm portion K1 and the second arm portion K2. Then, the converter control unit 25 may switch on and off of each switching element provided in each arm portion every 1/3 cycle of the alternating-current voltage supplied from the alternating-current power supply 4, and may appropriately execute synchronous rectification control and/or PAM control. The number of the arm portions may be appropriately changed without departing from the scope of the present disclosure.

In addition, in the above-described embodiment, it is determined whether or not a current flows through the bridge rectifier circuit 200 based on the AC current Iac, but the present disclosure is not limited thereto. For example, the shunt resistor may be provided in the line h3, and the current flowing through the shunt resistor may be detected to determine whether or not a current flows through the bridge rectifier circuit 200.

FIG. 10 is a diagram showing a configuration example of an air conditioner to which the motor drive device according to the present embodiment is applied. In FIG. 10, an air conditioner 50 includes a refrigerant circuit 51. In the refrigerant circuit 51, for example, a compressor 52 that compresses and sends out a refrigerant, a condenser 54, an expansion valve 55, and an evaporator 56 are provided as main components. In addition, the refrigerant circuit 51 is provided with a four-way valve 53 that switches a circulation direction of the refrigerant. The compressor 52 is controlled by a compressor motor 5a driven by the motor drive device 1 according to the present embodiment.

### (Supplementary Notes)

The converter device, the control method therefor, and the program described in the above-described embodiment are understood as follows, for example.

A converter device according to a first aspect of the present disclosure includes: a bridge rectifier circuit (200) that includes a plurality of switching elements (Q1 to Q4) connected in a bridge configuration and is configured to convert an alternating-current power supplied from an alternating-current power supply (4) into a direct-current power and output the direct-current power, a reactor (L1) provided in a line (h1) that connects the alternating-current power supply and the bridge rectifier circuit, a smoothing capacitor (C1) connected between output terminals of the bridge rectifier circuit, and a converter control unit (25) that includes a plurality of control modes and controls the plurality of switching elements in response to the control mode, in which the converter control unit includes a mode switching unit (44) that selects, based on a physical quantity related to a load (5) connected to an output side of the smoothing capacitor, any one of the plurality of control modes, and a switching control unit (43) configured to execute a first control mode, as one of the plurality of control modes, that sets positive-side switching elements (Q1, Q2) connected to a positive electrode side of the smoothing capacitor to an off-state, switches, in accordance with a phase of an alternating-current voltage, drive periods of negative-side switching elements connected to a negative electrode side of the smoothing capacitor, and controls the negative-side switching elements (Q3, Q4) to be turned on and off a plurality of times to boost a voltage across the smoothing capacitor, in each of the drive periods.

According to the above aspect, in the first control mode, since the positive-side switching elements are set to the off-state, it is possible to easily prevent a reverse current flowing from the smoothing capacitor toward the alternating-current power supply. In addition, since the drive period of the negative-side switching elements is switched according to the phase of the alternating-current voltage and the negative-side switching elements are turned on and off a plurality of times in the drive period, the voltage across the smoothing capacitor can be boosted.

A converter device according to a second aspect of the present disclosure is the converter device according to the first aspect, in which the switching control unit (43) is configured to execute, as one of the plurality of control modes, a second control mode that switches drive periods of positive-side switching elements (Q1, Q2) based on a phase of the alternating-current voltage, and controls the positive-side switching elements (Q1, Q2) and negative-side switching elements (Q3, Q4) paired with the positive-side switching element to be alternately turned on and off during each of the drive periods, to boost a voltage across the smoothing capacitor, and the mode switching unit (44) selects the first control mode in a case where the physical quantity related to the load (5) is less than a first threshold value, and selects the second control mode in a case where the physical quantity related to the load is equal to or greater than the first threshold value.

According to the above aspect, when the physical quantity related to the load is less than the first threshold value, the first control mode in which the positive-side switching elements are set to the off-state is selected, so that the direct-current voltage can be boosted while preventing the reverse current. Then, when the physical quantity related to the load is equal to or greater than the first threshold value, the execution mode is switched from the first control mode to the second control mode, so that the second control mode in which the positive-side switching elements and the negative-side switching elements are alternately turned on and off in a state where the direct-current voltage is boosted can be executed. As a result, the mode can be switched in a state where the direct-current voltage is stable, and it is possible to easily prevent the reverse current.

A converter device according to a third aspect of the present disclosure is the converter device according to the second aspect, in which the switching control unit includes a current determination unit (42) that determines whether a current is flowing in the bridge rectifier circuit when all of the switching elements are in an off-state, and in the second control mode, the switching control unit (43) sets, as a start timing of the drive period, a timing at which the current determination unit determines that a current is flowing in the bridge rectifier circuit.

According to the above aspect, in the second control mode, the positive-side switching elements can be set to the on-state only in a period in which the current flows through the bridge rectifier circuit. As a result, it is possible to more reliably prevent the reverse current from flowing.

A converter device according to a fourth aspect of the present disclosure is the converter device according to the second aspect or the third aspect, in which the switching control unit (43) includes, as one of the plurality of control modes, a third control mode that sets the switching element to an on-state at a timing at which a current flows through parasitic diodes (D1 to D4) of the switching element, and the mode switching unit (44) is configured to switch, when the third control mode is selected, from the third control mode to the first control mode in a case where a predetermined switching condition is satisfied, and switch, when the first control mode is selected, from the first control mode to the second control mode in a case where a predetermined switching condition is satisfied.

According to the above aspect, the third control mode is not directly transitioned to the second control mode, but the third control mode is transitioned to the second control mode via the first control mode. As a result, the first mode can be transitioned to the second mode in a state where the alternating-current voltage on the input side of the bridge rectifier circuit is higher than the direct-current voltage. As a result, it is possible to effectively and easily prevent the reverse current.

A motor drive device (1) according to a fifth aspect of the present disclosure includes the converter device (2) according to any one of the first aspect to the fourth aspect.

An air conditioner (50) according to a sixth aspect of the present disclosure includes the motor drive device (1) according to the fifth aspect, a compressor motor (5a) driven by the motor drive device (1), and a compressor (52) driven by the compressor motor (5a).

A control method for a converter device (2) according to a seventh aspect of the present disclosure, including a bridge rectifier circuit (200) that includes a plurality of switching elements (Q1 to Q4) connected in a bridge configuration, and is configured to convert an alternating-current power supplied from an alternating-current power supply (4) into a direct-current power and output the direct-current power, a reactor (L1) provided in a line that connects the alternating-current power supply and the bridge rectifier circuit, and a smoothing capacitor (C1) connected between output terminals of the bridge rectifier circuit, the control method being executed by a computer and including a process of selecting, based on a physical quantity related to a load connected to an output side of the smoothing capacitor, any one of the plurality of control modes, and a process of executing, as one of the plurality of control modes, a first control mode that sets a positive-side switching element connected to a positive electrode side of the smoothing capacitor to an off-state, switches, in accordance with a phase of an alternating-current voltage, drive periods of a negative-side switching element connected to a negative electrode of the smoothing capacitor, and controls the negative-side switching element to be turned on and off a plurality of times to boost a voltage across the smoothing capacitor, in each of the drive periods.

A program according to an eighth aspect of the present disclosure is a program causing a computer to execute the control method for a converter device according to the seventh aspect.

### Reference Signs List

1: motor drive device
2: converter device
3: inverter device
4: alternating-current power supply
5: motor
5a: compressor motor
21: rectification circuit
22: current sensor
23: voltage sensor
24: gate driver
25: converter control unit
32: inverter control unit
41: zero-crossing detection unit
42: current determination unit
43: switching control unit
44: mode switching unit
50: air conditioner
51: refrigerant circuit
52: compressor
53: four-way valve
54: condenser
55: expansion valve
56: evaporator
200: bridge rectifier circuit
C1: smoothing capacitor
D1: parasitic diode
D2: parasitic diode
D3: parasitic diode
D4: parasitic diode
K1: first arm portion
K2: second arm portion
L1: reactor
Q1: switching element (positive-side switching element)
Q2: switching element (positive-side switching element)
Q3: switching element (negative-side switching element)
Q4: switching element (negative-side switching element)

## Claims

1. A converter device comprising:
a bridge rectifier circuit that includes a plurality of switching elements connected in a bridge configuration and is configured to convert an alternating-current power supplied from an alternating-current power supply into a direct-current power and output the direct-current power;
a reactor provided in a line that connects the alternating-current power supply and the bridge rectifier circuit;
a smoothing capacitor connected between output terminals of the bridge rectifier circuit; and
a converter control unit that includes a plurality of control modes and controls the plurality of switching elements in response to the control mode,
wherein the converter control unit includes
a mode switching unit that selects, based on a physical quantity related to a load connected to an output side of the smoothing capacitor, any one of the plurality of control modes, and
a switching control unit configured to execute a first control mode, as one of the plurality of control modes, that sets a positive-side switching element connected to a positive electrode side of the smoothing capacitor to an off-state, switches, in accordance with a phase of an alternating-current voltage, drive periods of a negative-side switching element connected to a negative electrode side of the smoothing capacitor, and controls the negative-side switching element to be turned on and off a plurality of times to boost a voltage across the smoothing capacitor, in each of the drive periods.

2. The converter device according to Claim 1,
wherein the switching control unit is configured to execute, as one of the plurality of control modes, a second control mode that switches drive periods of a positive-side switching element based on a phase of the alternating-current voltage, and controls the positive-side switching element and a negative-side switching element paired with the positive-side switching element to be alternately turned on and off during each of the drive periods, to boost a voltage across the smoothing capacitor, and
the mode switching unit selects the first control mode in a case where the physical quantity related to the load is less than a first threshold value, and selects the second control mode in a case where the physical quantity related to the load is equal to or greater than the first threshold value.

3. The converter device according to Claim 2,
wherein the switching control unit includes a current determination unit that determines whether a current is flowing in the bridge rectifier circuit when all of the switching elements are in an off-state, and
in the second control mode, the switching control unit sets, as a start timing of the drive period, a timing at which the current determination unit determines that a current is flowing in the bridge rectifier circuit.

4. The converter device according to Claim 2,
wherein the switching control unit includes, as one of the plurality of control modes, a third control mode that sets the switching element to an on-state at a timing at which a current flows through a parasitic diode of the switching element, and
the mode switching unit is configured to
switch, when the third control mode is selected, from the third control mode to the first control mode in a case where a predetermined switching condition is satisfied, and
switch, when the first control mode is selected, from the first control mode to the second control mode in a case where a predetermined switching condition is satisfied.

5. A motor drive device comprising:
the converter device according to any one of Claims 1 to 4.

6. An air conditioner comprising:
the motor drive device according to Claim 5;
a compressor motor driven by the motor drive device; and
a compressor driven by the compressor motor.

7. A control method for a converter device including a bridge rectifier circuit that includes a plurality of switching elements connected in a bridge configuration, and is configured to convert an alternating-current power supplied from an alternating-current power supply into a direct-current power and output the direct-current power, a reactor provided in a line that connects the alternating-current power supply and the bridge rectifier circuit, and a smoothing capacitor connected between output terminals of the bridge rectifier circuit, the control method being executed by a computer, provided with a plurality of control modes, and comprising:
a process of selecting, based on a physical quantity related to a load connected to an output side of the smoothing capacitor, any one of the plurality of control modes; and
a process of executing, as one of the plurality of control modes, a first control mode that sets a positive-side switching element connected to a positive electrode side of the smoothing capacitor to an off-state, switches, in accordance with a phase of an alternating-current voltage, drive periods of a negative-side switching element connected to a negative electrode of the smoothing capacitor, and controls the negative-side switching element to be turned on and off a plurality of times to boost a voltage across the smoothing capacitor, in each of the drive periods.

8. A program causing a computer to execute the control method for a converter device according to Claim 7.
